Europäisches Patentamt

**European Patent Office**

Office européen des brevets

(11) Publication number:

**0 399 959**

**A1**

## (12) EUROPEAN PATENT APPLICATION

(21) Application number: 90830174.0

(22) Date of filing: 23.04.90

(51) Int. Cl.⁵: **E04F 15/16, E04F 15/10,**
**B44F 1/10, B29D 31/00**

(30) Priority: 22.05.89 IT 2059489

(43) Date of publication of application:
**28.11.90 Bulletin 90/48**

(84) Designated Contracting States:
**AT BE CH DE DK ES FR GB GR LI LU NL SE**

(71) Applicant: **ARTIGO S.p.A.**
**Piazzale Cadorna 5**

I-20123 Milan(IT)

(72) Inventor: **Zangrandi, Camillo**
**Via Aselli 25**
**Milan(IT)**

(74) Representative: **Righetti, Giuseppe et al**
**Bugnion S.p.A. Via Carlo Farini, 81**
**I-20159 Milano(IT)**

(54) Slab for flooring and related floor.

(57) A single-coloured slab made of elastomeric material and the like for flooring comprising a substantially uniform base pattern and a number of elongate reliefs (3) associated with each other so as to form several distinct groups (4 to 12) of reliefs.

The reliefs in some groups are disposed in a different manner than the reliefs in other groups so that they may reflect the light acting on the slab in a different manner. Preferably the reliefs in some groups have an inclined direction relative to the direction of other groups, the inclination angle ranging between 20° and 160°.

In one embodiment the distance between contiguous reliefs is in the range of 0.4 to 3 mm and in a further embodiment the height of the reliefs is included between 0.2 and 1 mm.

FIG 1

EP 0 399 959 A1

# SLAB FOR FLOORING AND RELATED FLOOR

The present invention relates to a slab made of elastomeric material and the like used for flooring, and to the related floor comprising a number of said slabs.

In greater detail the invention relates to a slab for flooring with areas simulating a different colour hue although they are made of an elastomeric material in a single colour.

Slabs, plates, tiles and the like in several colours used for flooring wide surfaces are well-known in the art.

For example French Patent No. 2,124,827 discloses a floor made by associating two layers of rubber or synthetic material of different colour with each other in a mold, then forming a number of inlaid pieces in the two layers associated with each other and finally removing the elastomeric material from the upper layer in the region of the inlaid pieces so as to show the colour of the lower layer which is different from that of the upper one.

There are also other solutions which are used, among other things, for mats and the like where, as described in US Patent No. 2,915,785 for example, a layer of rubber in which inlaid pieces have been cut is covered with a paint of different colour. The subsequent grinding of the paint at the top of the inlaid pieces gives rise to a differentiated colour between the inlaid pieces and the remaining outer surface.

It is also known from US No. 4,731,139 the accomplishment of rubber floors made by associating two layers of different colours with each other in a mold for the formation of a number of inlaid pieces.

Subsequently the product removed from the mold is put in a compressed condition between two appropriate plates and still under pressure is submitted to the action of a cutting device moved parallelly to the plates in order to remove the upper layer coating the inlaid pieces.

It is apparent that all known embodiments require the use of grinding and cutting tools and in general of suitable means for taking away some material in order to expose a colour of the lower layer which is different from that of the upper coating layer.

However the cutting operation could give rise to the formation of uneven edges defining the top of the inlaid pieces and working swarfs could remain in the very narrow space existing between the inlaid pieces, which would make the cleaning operation difficult and complicated in order not to impair the aesthetic appearance of the product due to the presence of working waste.

A further drawback of known procedures and embodiments is given by the fact that it is necessary to adopt several rubber compositions for each single slab or floor depending upon the different colours provided on the outer surface.

Unfortunately the diversification of the compositions in order to achieve the different colours brings about not only different formulations involving several tests in order to come to the desired colour, but also the subsequent storage of differentiated products and as a result the final product will have a higher cost.

A further drawback connected with known embodiments consists in that the different colour of an area relative to another could give rise to an alteration in the course of time of one or more colours due to the degradation of the material, which could result in a colour being less shown that another to such an extent that an undesired visual appearance may be originated or at all events a visual appearance different from the desired one.

The present invention aims at providing a slab for flooring and the related floor which are devoid of all the above drawbacks.

The object of the present invention is therefore a slab made of a single-coloured elastomeric material or the like comprising a base surface having a susbtantially uniform pattern and designed to form part of the floor covering, said slab being characterized in that it comprises a number of elongate reliefs associated with one another so as to constitute groups of reliefs in which the reliefs of some groups are disposed differently from the reliefs of other groups in order to reflect the light acting on the slab in a different manner.

The present invention will be best understood from the following detailed description given by way of non-limiting example with reference to the accompamying drawings, in which:

- Fig. 1 is a plan view of a slab portion in accordance with the invention;
- Figs. 2 and 3 are exemplifications of different colour hues which the slab shown in Fig. 1 can take when two persons are looking at it from two opposite positions and the slab is submitted to the action of light.

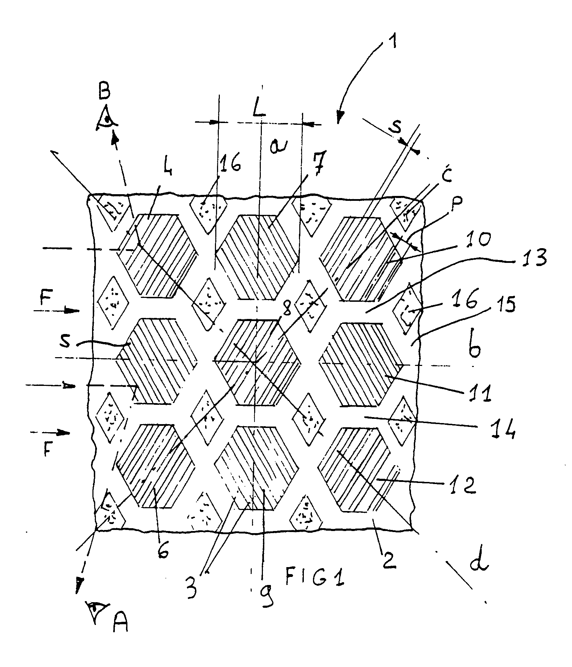

Shown in Fig. 1 and identified by reference numeral 1 is a slab portion designed to form a floor, together with other slabs, for example and among other things in a civilian or industrial building or to cover the floor in a conference hall, a waiting room or public premises in general.

The slab 1 is made of a viscoelastomeric material in a single colour.

Hereinafter by the term "viscoelastomeric material" it is intended to refer to all materials normally used or which can be used for known floorings, such as elastomeric, polyurethane, thermoplastic materials and the like.

The slab 1 made of an elastomeric composition in a dark colour is comprised of a square-shaped base surface 2 and a number of elongate reliefs 3 in the form of longitudinal ribs projecting from the slab surface.

Fundamental features of the invention are both the formation of groups of reliefs 3 and the arrangement of some of said groups so that the reliefs included therein have different orientations than the reliefs of other groups in order to reflect the light acting on the slab in a different manner.

The solution shown in Fig. 1 and relating to one of the possible embodiments based on the above general principle consists in forming a plurality of groups identified by reference numerals 4 to 12.

Groups 5,11 and 7,9, disposed at the end points of the perpendicular axes a and b include reliefs 3 which are inclined in the same direction and sense relative to axis a, whereas groups 4,12 and 6,10 disposed at the end points of the diagonals c and d include reliefs 3 with crossed directions with respect to those of the preceding reliefs and preferably the reliefs at the end points of axes a and b and those on diagonals c and d are symmetrically inclined to one another with respect to axis a.

In another preferred embodiment the slab 1 shown in Fig. 1 comprises a central group 8 formed with reliefs 3 disposed in the same direction as the reliefs belonging to the groups disposed at the ends of diagonals c and d.

The different reflection of light due to the different arrangement of the reliefs gives rise, as explained in the following, to hue variations in the single slab colour.

The slab portion 1 in Fig. 1 can preferentially constitute a base module with the pattern repeated over the whole longitudinal and transverse extension of the slab or, as an alternative form, several modules can be adopted which are different from one another and which are repeated on the slab.

The floor in a form adapted to be rolled up upon itself, can consist of identical slabs or slabs which are different from one another.

According to one embodiment, the ribs 3 of the different groups are parallel to one another, have the same pitch the values of which range between 0.4 mm and 3 mm, and a height included between 0.2 and 1 mm maximum, preferably in the range of 0.4 to 0.7 mm.

Due to the same height of the reliefs, the appropriate distance therebetween and the reduced height of the ribs 3, areas of a predetermined extension on the slab can be involved in the phenomenon of light reflection so as to give rise to spots having different visually remarkable hues.

Preferred values for the angle of inclination between the ribs of contiguous groups are those included between $20°$ and $160°$.

According to a further preferred embodiment, in a base element of a square slab of 1 cm side, the number of ribs can vary from 26 to 3, while maintaining the thicknesses of the ribs between 0.2 and 3 mm.

The maximum and minimum values of the elements of a square slab with sides of 50 and 61 cm or twice or three times multiples and submultiples thereof are given hereinafter by way of example in connection with the module shown in Fig. 1:

thickness of the ribs s = 0.2-1 mm,
- pitch between ribs p = 1.5-3 mm,
-height of the ribs from the base surface 2 = 0.5 mm,
- number of ribs per group = 14-28,
- maximum size L in a group = 20-25 mm,
- ratio between the surface covered with the ribs and the overall surface of the slab 0.4 - 0.8.

As shown in Fig. 1, in a further possible embodiment the different relief groups are separated from each other by stripes or lengths 13, 14, 15 being part of the base surface 2 which are devoid of any unevenness so as to give origin to glossy areas in contrast with the top of protuberances 16 the lateral outline of which is parallel to the outline of the groups of adjacent reliefs.

The visual contrast between the smoothness of the stripes defining the groups and the top of the polygonal protuberances can be achieved in many ways, for example by making the top of the protuberances dull with appropriate pressing means such as sandblasting of the mold parts designed to form the protuberances themselves or creation of other surface microunevennesses on the mold parts.

The invention attains the intended aims.

The explanation of the results achieved with the present invention can be made only through some hypotheses, due to the fact that the involved phenomena which simultaneously concern optical effects on polymeric, elastomeric or plastic materials and geometric patterns in relief on such materials are not yet completely clear.

In addition it has been surprisingly found that with a slab as the one shown in Fig. 1 or with similar patterns, formed for example with a substantially dark or even black composition, it has been possible to achieve the result of a different graduation of the same colour in different areas of the slab.

In fact it has been already known in the art that black bodies tend to take up the light in a more or less complete manner and therefore the optimal result achieved with the present invention, as already said, can only be explained with the help of hypotheses.

According to a possible hypothesis it is assumed that the direction of the light acts on the slab with a component in the sense and direction of arrows F in Fig. 1 and the hypothetic reflections of light (in dotted lines) caused by reliefs 3, as they would appear to two observers A and B disposed at opposite locations as shown in the same figure, are considered in a merely diagrammatic and indicative way.

According to the hypothesis done the light ray F acting on groups 4 and 6 would be somewhat reflected towards B and hindered towards A due to the inclination of the reliefs 3 which would tend to create shadowed parts on A whereas the light ray acting on the group 5 would be reflected towards A and hindered towards B by virtue of an inclination of the reliefs 3 different from that of the former groups 4 and 6.

Practically, the different reflection of light on the slab can be summarized in the following table showing:
- at the top, the groups of reliefs 4 to 12 of slab 1 in Fig. 1;
- at the bottom, by marks + (plus) and - (minus) the groups having a lighter hue relating to those having darker hues for A and B respectively.

|   | 4 | 5 | 6 | 7 | 8 | 9 | 10 | 11 | 12 |
|---|---|---|---|---|---|---|----|----|----|
| A | - | + | - | + | - | + | -  | +  | -  |
| B | + | - | + | - | + | - | +  | -  | +  |

In the example the black colour used in the starting composition, depending upon the different effects of the light reflection on the different reliefs, takes hues under some circumstances which are different from black and can go from cold grey to warm black such as sepia.

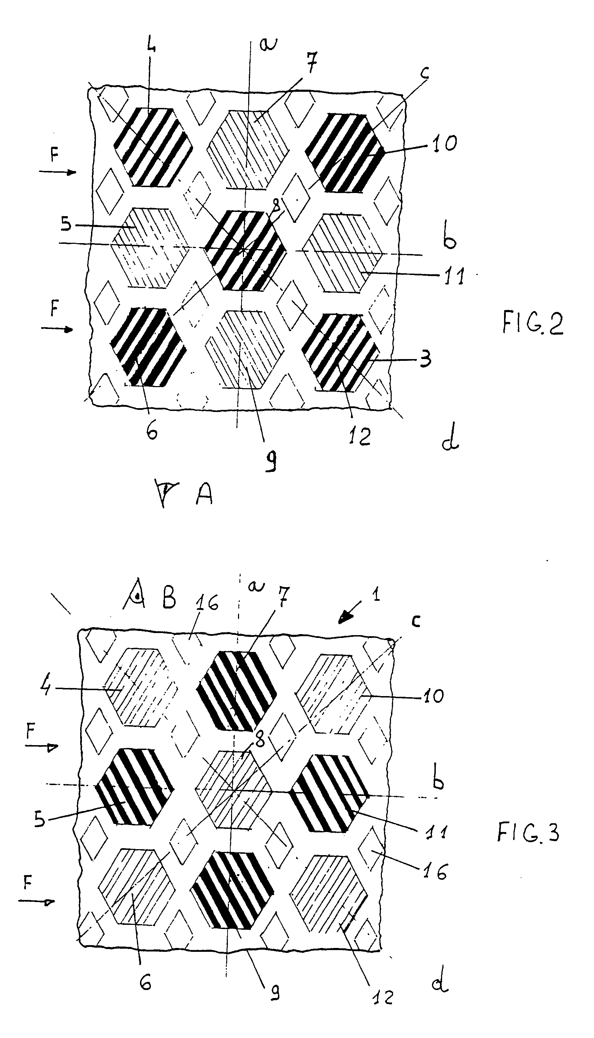

The different hues on the slab viewed by A and B are represented in Figs. 2 and 3 where darker spots are shown as black stripes.

As is apparent from the above diagrammatic table and from Figs. 2 and 3 each observer looking at the slab can see different areas which are disposed in a more or less alternate manner having apparently a different colour and at all events a differentiated visual appearance.

The variety of areas having different hues of the same colour can be further increased by the optional presence of protuberances 16 the upper ends of which have a dull or mat appearance as compared with the relief groups which are very glossy.

It is clear that the invention overcomes the drawbacks of the known art.

In fact by adopting a single-coloured composition in order to accomplish a flooring surface having differentiated colour shades or hues as above explained, the complicated different formulations and subsequent tests which are necessary for known slabs where several multi-coloured compositions are used, are avoided.

In addition the present single-coloured slab keeps unchanged in the course of time the differentiation of hue between different areas although it may be submitted to alterations in the long run, whereas in known slabs the degradation of a single colour in a given composition with respect to another contiguous colour could give rise to an unacceptable aesthetic alteration.

It is to be pointed out that the present slab and the related floor are products which can be accomplished merely by molding. In fact no further mechanical operations are needed such as the cutting end removal of elastomeric material, which operations were necessary in the known art in order to show a colour which was disposed under the outer surface.

Therefore, the product of the present invention does not exhibit working impurities between the reliefs 3 of the different groups, which results in a sure aesthetic acceptability of the exposed surface.

The inventive slab has been described and shown in Fig. 1 in connection with a group of reliefs having different orientations and a given distance from each other, but many variations to this embodiment are possible.

In fact the base module shown in Fig. 1 or even part of it could constitute a defined area of the slab base surface leaving the remaining portion of the slab with a smooth surface or optionally with a coaxial distribution of granules and the like so as to form surface unevennesses.

Generally a slab comprises at least two areas, one of which with a base module adapted to give origin to the light reflection conditions as above explained. Then the slab can be associated with other slabs according to appropriate combinations so that the areas which in each slab are provided with reliefs may give rise, from a visual point of view, to a different hue of the same colour on the floor surface.

Although some preferred and alternative embodiments have been shown and described the invention is not limited thereto and thereby and all modifications accessible to a person skilled in the art are intended as falling within the scope of the inventive idea.

For example the slab could be comprised of relief groups different from those shown in Fig. 1, in particular the slab could include a base module consisting of three relief groups disposed at the vertices of a triangle, at least one of said groups having a pattern different from that of the other groups.

Furthermore the reliefs could be joined together according to groups defined by a polygonal contour different from that shown in Fig 1: it could be for example an octagonal, circular, square or elliptic contour. Optionally the reliefs of the individual groups could be formed with curvilinear lengths either parallel to each other or not and/or mixed, that is curvilinear and rectilinear lengths.

In particular it is pointed out that the arrangement of the different groups with reliefs different from one another could be carried out so as to create, through differentiated chromatic effects, different patterns representing objects, persons, landscapes, trees, flowers and the like.

A variant form could consist of a slab the base surface of which has a uniform pattern and represents drawings formed with cylindrical inlaid pieces as already known and in which, according to the characteristics of the invention, the top of said cylindrical inlaid pieces is provided with reliefs oriented according to the above explanations.

Still according to a preferred embodiment, a slab can be conceived in which the base module, of a substantially quadrangular shape, has relief groups on the diagonals which are oriented according to one diagonal and relief groups on the central axes which are oriented according to the other diagonal.

In a further embodiment the slab margins could be comprised of a stripe extending along the contour sides and having an appropriate dullness obtained in the mold in order to create an appearance in contrast with the greater smoothness of the remaining base surface. By adopting this solution the delimitations between the different slabs disposed in side by side relation in order to form the floor would be less visible.

The slabs of the invention can be produced in a mold or a rolling press in which one of the surfaces in contact with the material must be provided with a drawing or pattern corresponding to the one it is wished to make visible on the finished product.

The product can be obtained either in the form of individual slabs or in rolls of different lengths including a plurality of slabs already associated with one another.

Included within the scope of the invention are elongate reliefs in the form of a number of asperities, unevennesses and the like aligned according to a preferential direction so as to give rise to said reflections of light.

As well as the above mentioned dark colours, the slab could also include light colours in which the reliefs are disposed in the above explained manner.

According to a further embodiment the slab could have drawings on both sides and in this case it will be necessary to provide the upper and lower portions of the mold with the corresponding drawings. With this solution the user can choose between two different surfaces or in case of wear of one surface he can use the opposite one with the same drawing or a different one.

In particular further features adapted to an increase of the play of light reflections on the slab could be represented by particular working steps carried out on the starting composition and during the molding procedure and tending to give a smooth appearance to the surface of the various relief groups on the slab.

A further important advantage of the invention is the antislipping feature offered by this slab as a result of the presence of a number of reliefs as previously described in the different embodiments.

## Claims

1. A slab made of a single-coloured elastomeric material comprising a base surface (2) having a substantially uniform pattern and designed to form part of the floor covering and the like, said slab being characterized in that it comprises a number of elongate reliefs (3) associated with one another so as to constitute groups (4 to 12) of reliefs, the reliefs of some groups (4,6,8,10,12) being disposed differently from the reliefs of other groups (5,7,9,11) in order to reflect the light acting on the slab in a different manner.

2. A slab according to claim 1, characterized in that the distance between contiguous reliefs (3) is in the range of 0.4 to 3 mm.

5

3. A slab according to claim 1 or 2, characterized in that the height of the reliefs (3) relative to the base surface (2) ranges between 0.2 and 1 mm.

4. A slab according to claim 1, 2 or 3, characterized in that the reliefs (3) of some groups (4,6,8,10,12) are inclined relative to the reliefs (3) of other groups (5,7,9,11) according to inclination angles ranging between 20° and 160°.

5. A slab according to claim 1, characterized in that it comprises at least a base module (1) formed with three groups provided each with reliefs (3), said module being repeated over the whole extension of the plate, at least one of the three groups having a pattern different from that of the other two groups.

6. A slab according to claim 1, characterized in that it comprises at least a base module (1) repeated over the whole extension of the slab, said module being formed with several groups provided with reliefs (3), at least said base module being at the inside of a net with substantially quadrangular mesh defined by central axes (a, b) at right angles to each other and diagonals (c, d), said groups being disposed at least at the ends of the axes and diagonals.

7. A slab according to claim 6, characterized in that a central group (8) is located at the inside of said module.

8. A slab according to claim 6, characterized in that the reliefs of end groups on the axes (a, b) have a different pattern than the reliefs of the end groups disposed on the diagonals (c, d).

9. A slab according to claim 6, characterized in that it comprises a central group (8) relative to the end pairs of groups disposed on the axes (a, b) and diagonals (c, d), the reliefs of said central group having the same pattern as one at least of said end pairs.

10. A slab according to claim 6, characterized in that the reliefs (3) of said groups (4 to 12) are inclined to the edges defining the slab.

11. A slab according to claim 6, characterized in that the reliefs (3) of the end groups on the diagonals (c, d) and the end groups on the axes (a, b) are symmetrically inclined to each other with respect to one of the contour sides of the slab.

12. A slab according to claim 6, characterized in that the reliefs (3) of the end groups on the diagonals (c, d) are at right angles to the reliefs (3) of the end groups on the axes (a, b).

13. A slab according to claim 6, characterised in that the reliefs (3) of the end groups on the diagonals (c, d) have the same direction as one of said diagonals (c or d).

14. A slab according to claim 6, characterized in that the reliefs (3) of the end groups on the axes (a, b) have the same direction as one of said diagonals and the reliefs of the end groups on the diagonals (c, d) have the same direction as the other diagonal (d or c).

15. A slab according to claim 1, characterized in that it comprises a number of groups (4 to 12) provided with reliefs (3) separated from one another by stripes (13, 14, 15) being part of the base surface (2).

16. A slab according to claim 15, characterized in that it comprises a protuberance (16) in the middle of contiguous groups.

17. A slab according to claim 16, characterized in that it comprises an inlaid piece disposed in the middle of contiguous groups the flat top surface of which has been accomplished in a different manner than said base surface (2).

18. A slab according to claim 15, characterized in that said inlaid piece is defined by sides parallel to the contour sides of the adjacent groups.

19. A slab according to claim 1, characterized in that the ratio between the area of the groups provided with reliefs (4 to 12) and the base surface (2) ranges between 0.4 and 0.8.

20. A slab according to claim 1, characterized in that the groups provided with reliefs (4 to 12) are defined by a polygonal contour.

21. A slab according to claim 1, characterized in that the reliefs (3) in the groups extend parallelly to one another.

22. A slab according to claim 1, characterized in that it comprises groups with reliefs (4 to 12) which are parallel and identical to each other, the pitch p of said reliefs ranging between 1.5 and 3 mm and the maximum dimensions L of the relief group measured at right angles to the relief direction being included between 20 and 25 mm.

23. A slab according to claim 1, characterized in that the slab has a square surface and in that provision is made for groups with reliefs (3) in the direction of one diagonal (c or d) of said square surface and groups with reliefs (3) in the direction of the other diagonal (d or c).

24. A slab according to claim 1, characterized in that said base surface (2) is smooth.

25. A slab according to claim 1, characterized in that said base surface (2) comprises a number of uniformly distributed inlaid pieces.

26. A slab according to claim 25, characterized in that it comprises a number of said reliefs (3) issuing from the free end of each inlaid piece.

27. A slab according to claim 1, characterized in that it comprises a base stripe of a given width extending along the whole contour of the base surface (2) which is made in a different manner than the remaining inner surface.

28. A slab according to claim 1, characterized in that it comprises an uneven stripe extending on the contour of the base surface.

29. A slab according to claim 1, characterized in that it comprises a number of areas provided with reliefs (3) in the form of ribs alternated with areas consisting of the only base surface (2) of the slab.

30. A slab according to claim 29, characterized in that the areas consisting of the only base surface (2) are provided with granules or asperities and the like.

31. A floor covering and the like made of viscoelastomeric material, characterized in that it comprises a number of slabs (1) as anyone of the proceding claims.

32. A floor covering according to claim 31, characterized in that adjacent slabs (1) are different from one another.

FIG 1

EP 0 399 959 A1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 140 658 (PIRELLI SOCIETA PER AZIONI) <br> * Page 1, line 65 - page 2, line 61; figures 1-4 * | 1,6,7, 15,18, 20,24, 25,27, 29,31 | E 04 F 15/16 <br> E 04 F 15/10 <br> B 44 F 1/10 <br> B 29 D 31/00 |
| A | CH-A- 467 408 (EDO-PLAST ETABLISSEMENT) <br> * Column 2, line 5 - column 3, line 19; figures 1,2 * | 1,4,5,6 -9,12- 15,23, 24,29 | |
| A | US-A-2 875 543 (SYLVESTER et al.) <br> * Column 1, line 18 - column 3, line 43; column 4, line 22 - column 8, line 59; figures 1-9 * | 1,2,4,6 ,10,15, 20,23, 25,26, 32 | |
| A | FR-A- 758 408 (THE B.F. GOODRICH CO.) <br> * Page 1, line 18 - page 2, line 19; page 3, lines 11-102; page 4, line 25 - page 5, line 56; figures 1-8 * | 1,31 | TECHNICAL FIELDS SEARCHED (Int. Cl.5) |
| A | FR-A-2 030 148 (SCHILDKRÖT AG VORM. RHEINISCHE GUMMI-UND CELLULOID-FABRIK) <br> * Page 1, line 20 - page 2, line 21; page 3, line 34 - page 6, line 23; figures 1-26 * | 1,4,12, 15,21, 24 | E 04 F <br> B 44 F <br> B 29 D |
| A | FR-A-2 535 369 (CERAMICHE FORLIVESI SPA) <br> * Page 1, line 1 - page 2, line 19; fig. * | 1,3 | |

The present search report has been drawn up for all claims

| Place of search | Date of completion of the search | Examiner |
|---|---|---|
| THE HAGUE | 30-08-1990 | AYITER J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)